# EUROPEAN PATENT SPECIFICATION

(11) **EP 4 541 663 B1**
(45) Date of publication and mention of the grant of the patent: **08.10.2025**
(21) Application number: 24204209.1
(22) Date of filing: 02.10.2024
(51) Int. Cl.: B60R 13/00, B60R 13/04

(54) **ATTACHING MEMBER, COMBINATION OF ATTACHING MEMBER AND ATTACHED MEMBER, AND VEHICLE**
BEFESTIGUNGSELEMENT, KOMBINATION AUS BEFESTIGUNGSELEMENT UND BEFESTIGUNGSELEMENT SOWIE FAHRZEUG
ÉLÉMENT DE FIXATION, COMBINAISON D'ÉLÉMENT DE FIXATION ET D'ÉLÉMENT FIXÉ, ET VÉHICULE

(30) Priority: 17.10.2023 JP 2023178629
(43) Date of publication of application: 23.04.2025
(73) Proprietor: MAZDA MOTOR CORPORATION, Hiroshima 730-8670 (JP)
(72) Inventor: KIRIGAYA, Kenki, Aki-gun, Hiroshima, 730-8670 (JP)
(74) Representative: Müller-Boré & Partner Patentanwälte PartG mbB

(56) References cited:
- CN-A- 114 954 330
- CN-A- 115 352 390

## Description

### BACKGROUND

The present invention relates to an attaching member, a combination of the attaching member and an attached member, and a vehicle.

Japanese Patent Laid-Open Publication No. 2019-217934 discloses an attachment structure for assembling an emblem to a grill of a vehicle. This patent document discloses the structure in which an emblem member having a penetration hole and a grill having a pin to be inserted into this penetration hole work together for stabilizing setting of the emblem member.

As disclosed in the above-described patent document, it is general to provide a fastening structure at an attached member in a case where an attaching member, such as the emblem, is attached to the attached member, such as the grill.

However, when the above-described fastening structure disclosed in the patent document is not provided previously, any other structure for attaching the attaching member may be necessary additionally. Herein, since some backlash (looseness) may occur due to its inappropriate attaching manner, some proper attaching structure for stabilizing attachment without backlash may become necessary.

The document CN115352390A discloses an attaching member to be attached to an attached member according to the preamble of claim 1.

### SUMMARY OF THE INVENTION

An object of the present invention is to provide an attaching member which can be properly attached to an attached member in a stable state with no backlash (looseness), without providing any particular fastening structure at the attached member.

The present invention is defined in independent claims. Preferred embodiments are defined in dependent claims. Particularly, in e.g., an electric automobile, an attaching member to be attached to an attached member is provided. Further particularly, the attached member comprises a pair of first frame portions which extend in a first direction, respectively, and are separated from each other in a second direction crossing the first direction, the attaching member comprises a first member including a first engaging portion (or a first hook portion) which engages with the first frame portions from one side of the second direction and a second member including a second engaging portion (or a second hook portion) which engages with a portion of the first frame portion which is positioned on the other side, in the second direction, of the first engaging portion from the other side of the second direction, the first member includes an engaging portion which extends in a third direction crossing both directions crossing the first direction and the second direction and engages with the second member, the second member includes an engaged portion which the engaging portion of the first member engages with, the engaging portion includes an inclined portion which is positioned on the one side of the second direction and extends obliquely from a tip of the engaging portion toward a base portion of the engaging portion and from the other side of the second direction to the one side of the second direction, and a portion of the engaging portion which is positioned on the one side of the second direction engages with the engaged portion of the second member.

According to the present invention, since the inclined portion extending obliquely from the tip of the engaging portion toward the base portion of the engaging portion and from the other side of the second direction to the one side of the second direction is provided, the engaged portion can be engaged by the engaging portion by gradually moving the second member toward the base portion of the engaging portion of the third direction from a state where the second member is inclined toward the tip of the engaging portion of the third direction relative to the first member when being attached. Herein, the first member receives a force which is applied from the engaged portion to the other side of the second direction at the engaging portion. Since the first engaging portion engages with the first frame portion from the one side of the second direction, when the force applied to the other side of the second direction is inputted to the first member, the moving to the one side of the second direction is restricted at the first engaging member. Meanwhile, the second member receives a force which is applied to the one side of the second direction from the engaging portion at the engaged portion. Since the second engaging portion engages with the first frame portion from the other side of the second direction, when the force applied to the one side of the second direction is inputted to the second member, the moving to the other side of the second direction is restricted at the second engaging portion. This cooperation of the first and second members enables attaching of the first and second members to the engaged member, without providing any particular fastening structure at the engaged member. Further, the attaching member can be suppressed from having some backlash (looseness) in the second direction, thereby ensuring the attaching in the stable state.

In an embodiment of the present invention, the first engaging portion and the second engaging portion of the attaching member may be to engage with the first frame portion of the attached member from the same side of the third direction.

According to this embodiment, both of the first and second members can be attached from the same side of the third direction at the attached member, so that workability of the attaching can be improved.

In another embodiment of the present invention, the engaging portion of the first member may be provided with a rib portion which extends in the first direction and in the third direction and contacts the engaged portion of the second member.

According to this embodiment, the rigidity of the engaging portion can be increased, and also positioning of the engaging portion and the engaged portion can be facilitated in the engaging. Thereby, moving of the first and second engaging portions in the second direction can be restricted and also an appropriate force which may not deform the first and second engaging portions can be inputted.

In another embodiment of the present invention, each of the first engaging portion and the second engaging portion of the attaching member may be constituted by plural portions. In other words, the first member may include a plurality of first engaging portions. The second member may include a plurality of second engaging portions.

According to this embodiment, the moving of the first and second members can be restricted respectively at different points, so that backlash (looseness) of the members in the second direction can be suppressed securely.

In another embodiment of the present invention, the attaching member may further comprise a fastening member to fasten the first member and the second member.

According to this embodiment, the first and second members are fixed so securely that the backlash (looseness) of these members in the second direction can be suppressed more securely.

In another embodiment of the present invention, the attached member may be a grill for a vehicle which comprises the first frame portion and a second frame portion which extends in the second direction.

According to this embodiment, the first and second members can be attached to the grill for the vehicle, without providing any particular fastening structure at the grill for the vehicle, and the backlash (looseness) of the members in the second direction can be suppressed.

In another embodiment of the present invention, the first engaging portion and the second engaging portion of the attaching member may be a decorative member to be attached to the vehicle.

According to this embodiment, the decorative member can be attached to the grill for the vehicle, without providing any particular fastening structure at the grill for the vehicle, and the backlash (looseness) of the decorative member in the second direction can be suppressed.

The present invention will become apparent from the following description which refers to the accompanying drawings.

### BRIEF DESCRIPTION OF THE DRAWINGS

FIG. **1** is a front view or an elevational view of a front structure of a vehicle according to an embodiment.
FIG. **2** is a front view or an elevational view of a decorative member which is attached to a grill for the vehicle in the front structure of the vehicle according to the embodiment.
FIG. **3** is a perspective view of a first member before attaching.
FIG. **4** is a perspective view of a second member before the attaching.
FIG. **5** is a back-face view showing the decorative member attached to the grill for the vehicle in the front structure of the vehicle according to the embodiment.
FIG. **6** is a sectional view showing a positional relationship of an engaging portion and an engaged portion.
FIG. **7** is a sectional view around the engaging portion.
FIG. **8** is a sectional view taken along line VIII-VIII of FIG. **5****.**
FIG. **9** is a sectional view taken along line IX-IX of FIG. **5****.**

### DETAILED DESCRIPTION OF THE INVENTION

Hereafter, an embodiment of the present invention will be described specifically referring to the drawings. Herein, the embodiment described below is just an example of the present invention, and therefore it does not to intend to restrict any application or use of the present invention.

The following description and figures are appropriately omitted and simplified for clarification. In the figures, the same reference characters are used for the same elements, and some duplications are omitted as needed. In the drawings, directions mean the ones on the figures if not particularly referred to, and a vehicle longitudinal direction is shown by arrows F, B, a lateral direction, in a width direction, of a vehicle is shown by arrows L, R, and a vehicle vertical direction is shown by arrows U, D.

Herein, in the embodiment, the parallel, horizontal, and vertical directions or the like have some tolerance enough not to hinder the effects of the present invention. The vehicle longitudinal direction corresponds to a third direction, the vehicle width direction corresponds to a first direction, and the vehicle vertical direction corresponds to a second direction.

### (Embodiment)

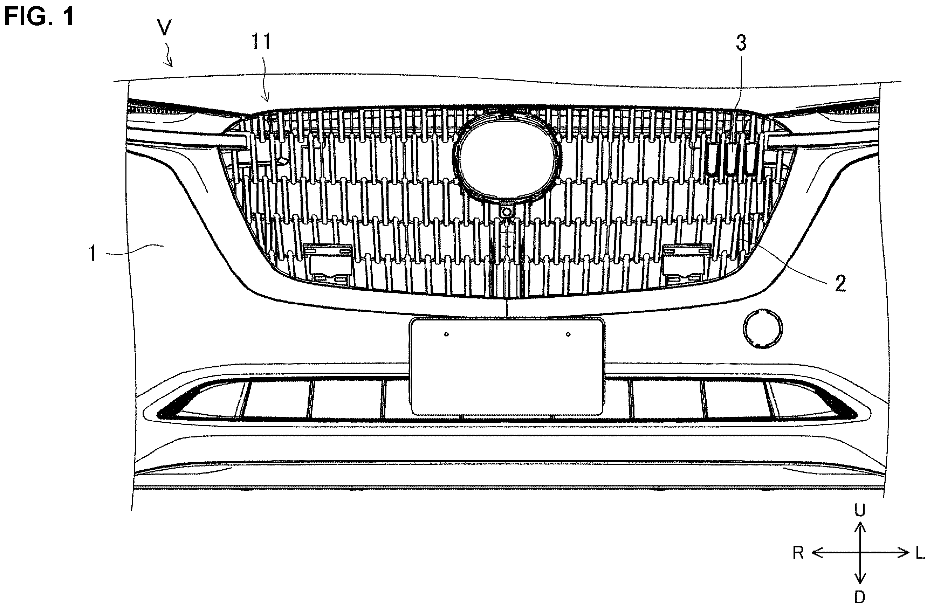

A front structure of a vehicle (e.g., an electric vehicle or an electric automobile) **V** will be described referring to FIG. **1.** FIG. **1** schematically shows main components of a front portion of the vehicle **V,** and illustration of other members, such as a bonnet and a shroud panel, is omitted here. A bumper face **1** which extends in the vehicle width direction is provided at the front portion of the vehicle **V.**

The bumper face **1** may be formed in a gently-curved shape such that a center, in the vehicle width direction, thereof protrudes forward, and covers over a front-end part of the vehicle. The bumper face **1** may have a grill opening **11** at a central portion, in the vehicle width direction, thereof. The grill opening **11** is a traveling-air introduction hole, where a grill member **2** is provided.

The grill member **2** may be formed in a grid shape in an elevational view, in a gently-curved shape such that a center, in the vehicle vertical direction, thereof protrudes forward slightly in a side view, and in a gently-curved shape such that a center, in the vehicle with direction, thereof protrudes forward in a plan view. A decorative member **3** is attached to the grill member **2,** particularly, an upper-left area of the grill member **2.** Herein, the decorative member 3 can be attached to any area of the grill member **2.** The decorative member **3** is attached to the grill member **2,** and the grill member **2** can be referred to as an "attached member" and the decorative member **3** can be referred to as an "attaching member."

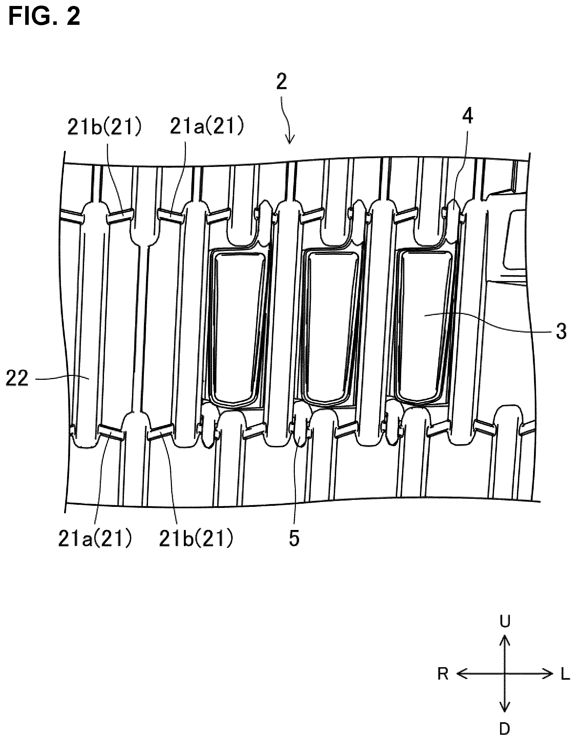

A structural example of the grill member **2** and an attachment example in which the decorative member **3** is attached to the grill member **2** will be described referring to FIG. **2.** FIG. **2** is an elevational view of an enlarged area where the decorative member **3** is attached to the grill member **2.** The decorative member **3** may have a design surface at its front face in the elevational view.

The grill member **2** comprises plural lateral portions **21** and one or plural vertical portions **22** which may be integrated, and is of a grid shape in the elevational view. The lateral portion **21** includes a first lateral portion **21a** and a second lateral portion **21b.**

The first lateral portion **21a** may be formed in a bar shape extending substantially in the vehicle width direction such that it is inclined slightly upward from its left side toward its right side. The second lateral portion **21b** may also be formed in a bar shape extending substantially in the vehicle width direction such that it is inclined slightly upward from its right side toward its left side.

The thickness of these portions **21a, 21b** may be substantially the same. The grill member **2** may be configured such that the first lateral portions **21a** and the second lateral portions **21b** are formed mutually in the vehicle width direction.

The lateral portions **21 (21a, 21b)** are separated from each other in the vehicle vertical direction. The lateral portion **21** corresponds to a first frame portion.

The vertical portion **22** may extend in the vehicle vertical direction and may be of a rectangular shape having a larger thickness than the first lateral portion **21a** and the second lateral portion **21b.** The vertical portion **22** may be configured such that its upper-end portion is interposed between a left-side end portion of the first lateral portion **21a** and a right-side end portion of the second lateral portion **21b,** and that its lower-end portion is interposed between a right-side end portion of the first lateral portion **21a** and a left-side end portion of the second lateral portion **21b.** The vertical portion **22** corresponds to a second frame portion.

The plural first lateral portions **21a** may be parallel to each other, the plural second lateral portions **21b** are parallel to each other, and the plural vertical portions **22** are parallel to each other.

The decorative member **3** comprises a first member **4** and a second member **5.** The first member **4** and the second member **5** engage with each other and they are attached to the grill member **2.**

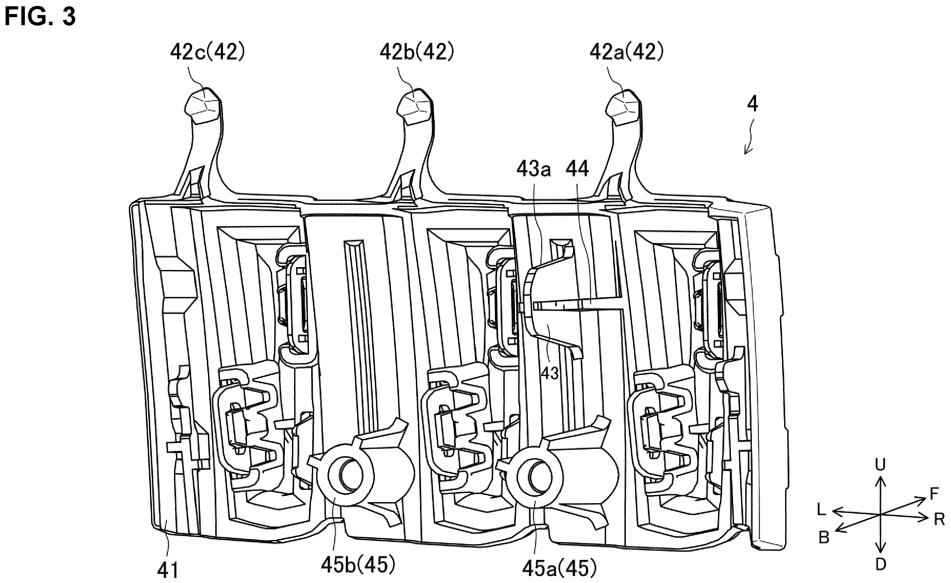

Next, a structural example of the decorative member **3** will be described referring to FIGS. **3** - **5****.**

A structural example of the first member **4** will be described referring to FIG. **3.** FIG. **3** is a perspective view of the first member **4** before being attached to the grill member **2,** when viewed from a rear-right side of the vehicle. The first member **4** may be a resin-made member, which comprises a body portion **41,** one or plural first engaging portions (or one or plural first hook portions) **42,** an engaging portion **43,** a rib portion **44** which is provided at the engaging portion **43,** and one or plural first insertion holes **45,** which may be integrally formed with the body portion **41.**

The body portion **41** may extend in the vehicle width direction and/or in the vehicle vertical direction. A design surface may be formed at a front side of the body portion **41.**

The plural first engaging portions **42** may extend upward from an upper end of the body portion **41.** The plural first engaging portions **42** are configured to be separated from each other e.g., in the vehicle width direction.

An upper-end portion of each of the first engaging portions **42** may be bent rearward in a hook shape. The plural first engaging portions **42** may engage with the lateral portions **21** from a front-and-upper side.

The plural first engaging portions **42** may include a right-side first engaging portion **42a** which is arranged at the rightmost side R in the vehicle width direction, a left-side first engaging portion **42c** which is arranged at the leftmost side L in the vehicle width direction, and a central first engaging portion **42b** which is arranged between the right-side first engaging portion **42a** and the left-side first engaging portion **42c** in the vehicle width direction.

The engaging portion **43** may projects rearward from the body portion **41** and extends in the vehicle longitudinal direction and in the vehicle vertical direction. The engaging portion **43** may be formed in a trapezoidal shape such that it expands in the vehicle vertical direction from its tip toward its base end in a side view.

An inclined portion **43a** which is inclined, particularly inclined upward from a lower side, is formed e.g., at an upper-side portion of the engaging portion **43** in an area extending from a tip of the engaging portion **43** to a base end of the engaging portion **43.** Further, the engaging portion **43** may be positioned between the right-side first engaging portion **42a** and the central first engaging portion **42b** in the vehicle width direction.

The rib portion **44** may be formed along both-side faces, in the vehicle width direction, of the engaging portion **43.** The rib **44** may protrude rearward from the body portion **41** and extends in the vehicle longitudinal direction and in the vehicle width direction. The rib portion **44** may be formed in the trapezoidal shape such that it expands in the vehicle vertical direction toward the body portion **41** in a plan view. The rib portion **44** may increase the rigidity of the engaging portion **43.** Herein, a rear end of the rib portion **44** may be positioned on a forward side of a rear end of the engaging portion **43.**

The plural first insertion holes **45** may be configured such that fastening members **6,** described later, are inserted into these holes **45.** The first insertion hole **45** may be formed in a hollow-cylindrical shape which protrudes rearward from the body portion **41.** A first insertion hole **45a,** one of the first insertion holes **45,** may be formed just below the engaging portion **43.** Another first insertion hole **45b** may be formed at a position which is located at the same level as the first insertion hole **45a** and between the left-side first engaging portion **42c** and the central first engaging portion **42b** in the vehicle width direction.

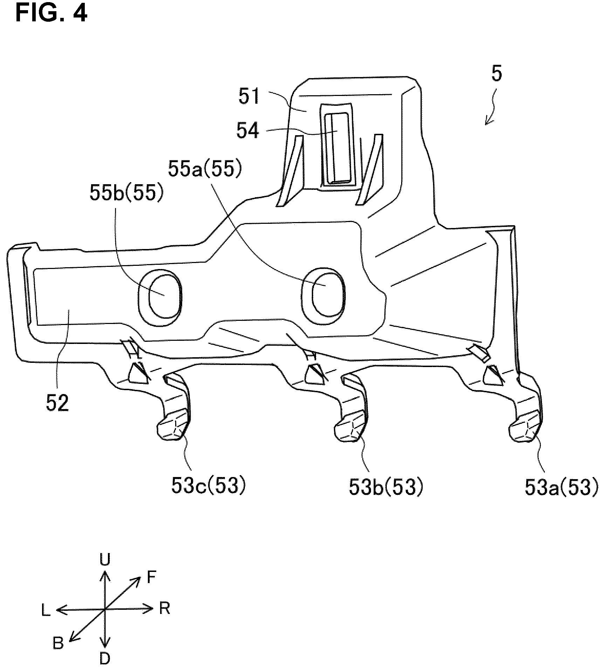

Next, a structural example of the second member **5** will be described referring to FIG. **4.** FIG. **4** is a perspective view of the second member **5** before being attached to the grill member **2,** when viewed from the rear-right side. The second member **5** may be a resin-made member, which comprises an upper-side body portion **51** and a lower-side body portion **52** which are formed integrally, plural second engaging portions **53,** an engaged portion **54,** plural second insertion holes **55.**

The upper-side body portion **51** may extend in the vehicle width direction and in the vehicle vertical direction. An upper end of the upper-side body portion **51** may be configured to be bent forward. The lower-side body portion **52** may protrude rearward in the side view and open at its front side. The lower-side body portion **52** may be formed integrally with the upper-side body portion **51** such that it extends downward from a lower end of the upper-side body portion **51.**

The plural second engaging portions **53** may extend forward from a lower end of the lower-side body portion **52.** The plural second engaging portions **53** may be configured to be separated from each other. A front-end portion of each of the second engaging portions **53** may be bent rearward in a hook shape. The plural second engaging portions **53** engage with the lateral portions **21** which are located below the first engaging portions **42** particularly from a front-and-lower side.

The plural second engaging portions **53** may include a right-side second engaging portion **53a** which is arranged at the rightmost side, a left-side second engaging portion **53c** which is arranged at the leftmost side, and a central second engaging portion **53b** which is arranged between the right-side second engaging portion **53a** and the left-side second engaging portion **53c** in the vehicle width direction.

The engaged portion **54** may be a rectangular-shaped hole which is formed at the upper-side body portion **51** and extends in the vehicle vertical direction in an elongated shape. A pair of triangular-shaped ribs, in the side view, may be formed at both sides, in the vehicle width direction, of the engaged portion **54.** These ribs may serve as a reinforcing member to connect the upper-side body portion **51** and an upper face of a protrusion portion of the lower-side body portion **52.**

The plural second insertion holes **55** may be configured such that the fastening members **6,** described later, are inserted thereinto. The second insertion hole **55** may be a circular hole which is formed at a face of the protrusion portion of the lower-side body portion **52** which extends in the vehicle vertical direction and in the vehicle width direction. A second insertion hole **55a,** one of the plural second insertion holes **55,** may be formed just below the engaging portion **43.** Another second insertion hole **55b,** the other one of the plural second insertion holes **55,** may be formed at a position which is located at the same level as the second insertion hole **55a** and between the left-side second engaging portion **53c** and the central second engaging portion **53b** in the vehicle width direction.

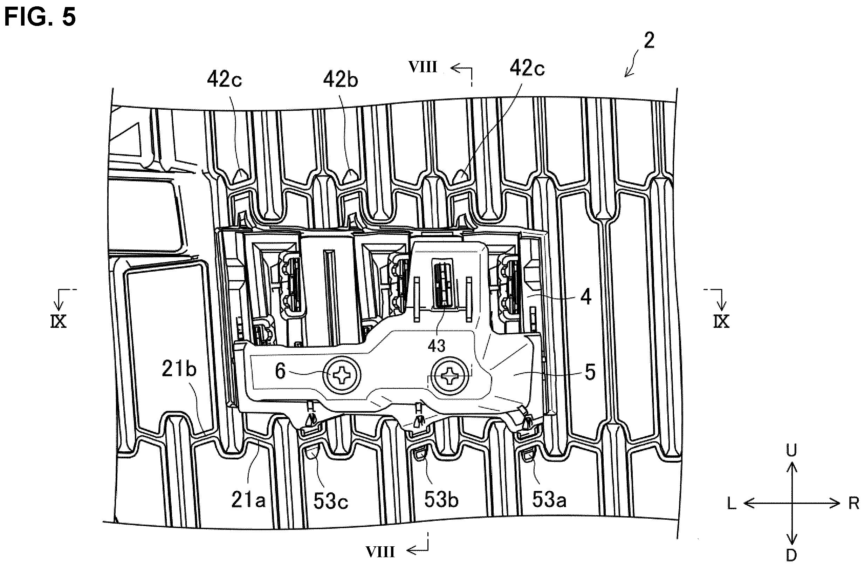

Next, a relationship of the first member **4** and the second member **5** will be described referring to FIG. **5.** FIG. **5** **is** a view of an area shown in FIG. **2****,** when viewed from a rear side of the grill member **2.** The decorative member **3** comprises the first member **4** and the second member **5** which is positioned behind the first member **4.**

As shown in FIG. **5****,** a positional relationship of the first member **4** and the second member **5,** when viewed from the rear side of the grill member **2,** in a case where the first and second members **4, 5** are attached to the grill member **2** is as follows. The right-side second engaging portion **53a** may be positioned on the right side of the right-side first engaging portion **42a,** the central second engaging portion **53b** may be positioned between the right-side first engaging portion **42a** and the central first engaging portion **42b,** and the left-side second engaging portion **53c** may be positioned between the central first engaging portion **42b** and the left-side first engaging portion **42c.**

The engaged portion **54** may overlap the engaging portion **43** in the vehicle longitudinal direction so that the engaging portion **43** can be inserted into the engaged portion **54.** The second insertion hole **55a** may overlap the first insertion hole **45a** in the vehicle longitudinal direction, and the second insertion hole **55b** may overlap the first insertion hole **45b** in the vehicle longitudinal direction. As described later, the plural fastening members **6** may be inserted into the plural second insertion holes **55** and the plural first insertion holes **45,** respectively, so that the first and second members **4, 5** are fastened together.

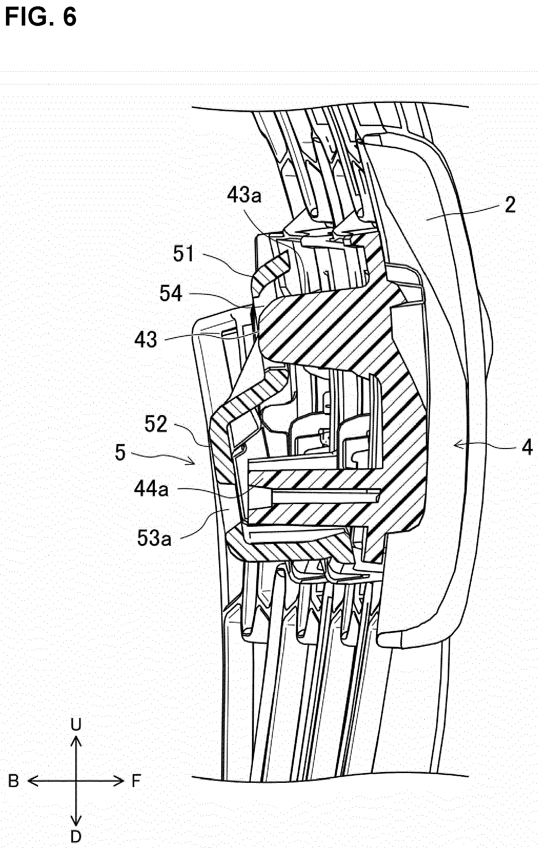

Next, an attaching manner in which the decorative member **3** is attached to the grill member 2 will be described referring to FIG. **6****.**

First, the first member **4** is attached to the grill member **2.** After the one or plural first engaging portions **42** are inserted into gaps between the adjacent vertical portions **2, 2,** the hook-shaped portions of their upper-end portions come to engage with the first lateral portions **21a** from the front side and the upper side of the grill member **2.** Thereby, the first engaging portions **42** contact upper faces of the first lateral portions **21a** at the hook-shaped portions of their upper-end portions, thereby restricting the first member **4** from moving downward.

Then, the second member **5** is attached from the rear side of the grill member **2.** After the one or plural second engaging portions **53** are inserted into gaps between lower end of the first member **4** and the vertical portions **2,** the hook-shaped portions of their upper-end portions come to engage with the first lateral portions **21a** from the front side and the lower side of the grill member **2.** Thereby, the second engaging portions **53** contact lower faces of the first lateral portions **21a** at the hook-shaped portions of their upper-end portions, thereby restricting the second member **5** from moving upward.

Next, the engaging portion **43** engages with the engaged portion **54.** As described above, the inclined portion **43a** which is inclined upward from the lower side is formed at the upper-side portion of the engaging portion **43** in the area extending from the tip of the engaging portion **43** to the base end of the engaging portion **43.** Thereby, as shown in FIG. **6****,** the upper portion of the second member **5** may be moved from a state where the upper portion of the second member **5** is inclined rearward relative to the first member **4** so that the engaging portion **43** is inserted into the engaged portion **54.** Consequently, the engaging portion **43** engages with the engaged portion **54.**

Herein, the inclined portion **43a** and an upper side of the rectangular-shaped hole of the engaged portion **54** may contact each other. Further, a rear-end portion of the rib portion **44** may contact the second member **5.**

Finally, the plural fastening members **6** may be inserted into the plural first insertion holes **45** and the plural second insertion holes **55** which overlap each other, so that the first member **4** and the second member **5** are fixedly fastened.

The decorative member **3** is attached to the grill member **2** in the above-described manner. Further, the design surface of the first member **4** may be viewed through the gaps of the grid-shaped grill member **2** in the elevational view. The upper-side body portion **51** and the lower-side body portion **52** of the second member **5** may be positioned on the vehicle rearward side of the body portion **41** of the first member **4.**

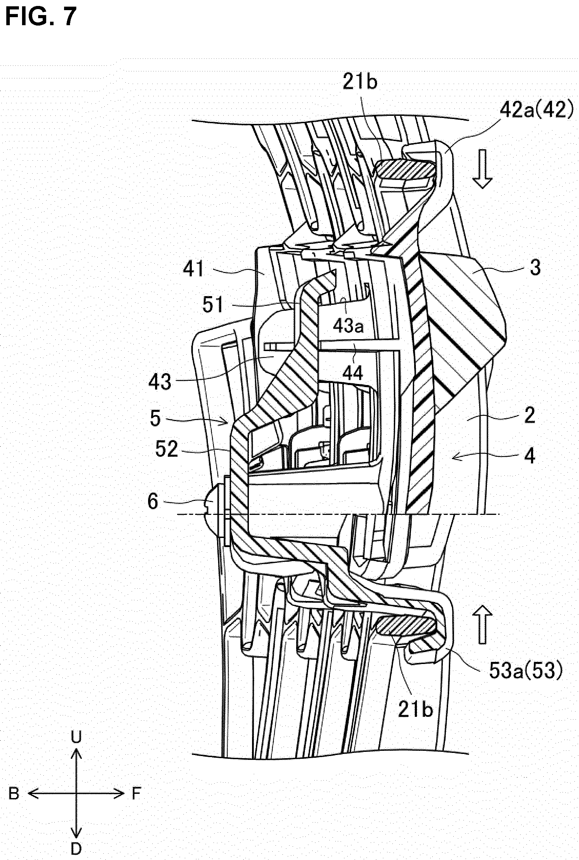

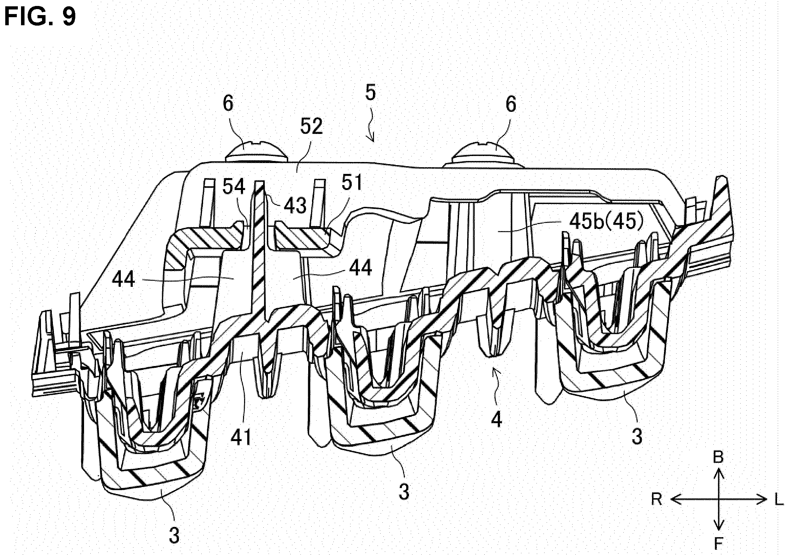

Next, a structure in which the decorative member **3** is attached to the grill member **2** will be described referring to FIGS. **7** - **9****.**

As shown in FIG. **7****,** the inclined portion **43a** of the engaging portion **43** and the upper side of the rectangular-shaped hole of the engaged portion **54** may contact each other.

A force of the second member **5** for drawing down the first member **4** may act on a contact portion where the inclined portion **43a** and the engaged portion **54.**

Further, the first engaging portion **42** of the first member **4** engages from the upper side. That is, the first member **4** is restricted from moving downward by the first engaging portion **42.**

That is, the upward moving of the first member **4** is restricted by receiving the downward force at the contact portion with the engaged portion **54.** Meanwhile, the downward moving of the first member **4** is restricted by the first engaging portion **42** as well. Accordingly, the first member **4** is restricted from moving in the vertical direction.

Meanwhile, a force of the first member **4** for drawing up the second member **5** may act on the contact portion where the inclined portion **43a** and the engaged portion **54** contact each other. This force is an upward-directed force. Further, the second engaging portion **53** engages with the second member **5** from the lower side. That is, the second member **5** is restricted from moving upward by the second engaging portion **53.**

That is, the downward moving of the second member **5** is restricted by receiving the upward force at the contact portion with the inclined portion **43a.** Meanwhile, the upward moving of the second member **5** is restricted by the second engaging portion **53** as well. Accordingly, the second member **5** is restricted from moving in the vertical direction.

Further, since the inclined portion **43a** is provided, the engaging portion **43** may engage with the engaged portion **54** by gradually moving an upper portion of the second member **5** vehicle forward from a state in which the upper portion of the second member **5** is inclined rearward relative to the first member **4** in the attaching.

Herein, an inclination angle of the inclined portion **43a** may be set at an appropriate angle enough to prevent the engaged portion **54** from sliding in a state where the inclined portion **43a** and the engaged portion **54** contact each other. Particularly, the inclination angle of the inclined portion **43a** may be set such that a static frictional force generated between the engaging portion **43** and the engaged portion **54** is larger than a rearward-directed force acting on the engaged portion **54** along the inclined portion **43a** in the state where the inclined portion **43a** and the engaged portion **54** contact each other.

As described above, the first member **4** and the second member **5** engage with each other by means of the engaging portion **43** and the engaged portion **54,** and their upward-and-downward moving, i.e., their moving in the vehicle vertical direction, are restricted. Accordingly, the attaching of the decorative member **3** comprising the first member **4** and the second member **5** can be attained without proving any particular structure at the grill member **2,** and the backlash (looseness) of the decorative member **3** in the vertical direction can be suppressed.

Further, both the first member **4** and the second member **5** may be attached to the back face of the grill member **2,** i.e., to a vehicle-rearward-side face of the grill member **2.** Particularly, since the first engaging portion **42** and the second engaging portion **53** engage with the lateral portions **21** from the front side, both the first member **4** and the second member **5** can be attached to the grill member **2** from the same side in their attaching, thereby improving the workability in the attaching.

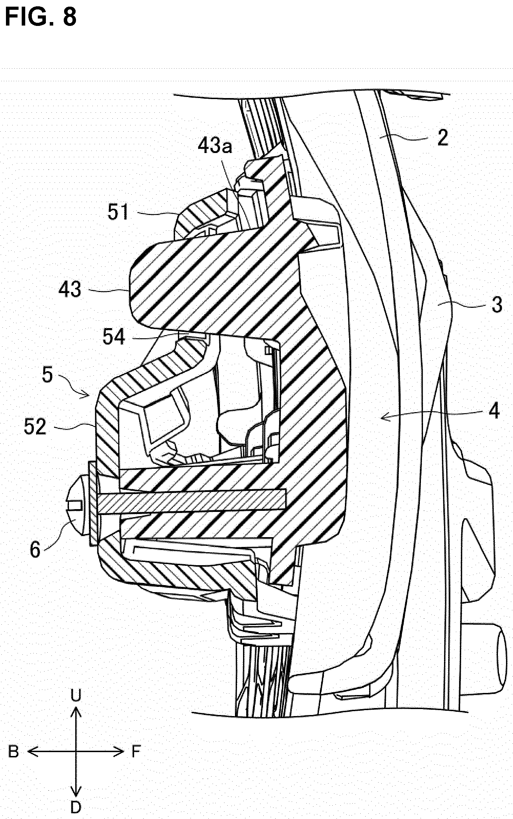

FIG. **8** is a sectional view taken along line VIII-VIII of FIG. **5****.** At the engaging portion **43** may be provided the rib portion **44** which extends in the vehicle vertical direction and in the vehicle width direction along the respective faces of its vehicle width direction. Thereby, the rigidity of the engaging portion **43** may be increased.

Further, since a rear end of the rib portion **44** may contact the second member, positioning of the engaging portion **43** and the engaged portion **54** when they engage with each other may be facilitated. Accordingly, an appropriate force enough to restrict their moving in the vertical direction but to prevent any improper deformation of those can be inputted to the first engaging portion **42** and the second engaging portion **53.**

Further, each of the first engaging portion **42** and the second engaging portion **53** may be constituted by plural portions. In other words, plural first engaging portions **42** and plural second engaging portions **53** may be provided. Accordingly, the moving of these members **4, 5** in the vertical direction can be restricted at different points, thereby securely suppressing the vertical backlash (looseness) of the decorative member **3.**

Moreover, the decorative member **3** may comprise the plural fastening members **6** to fasten the first member **4** and the second member **5.** Accordingly, the first member **4** and the second member **5** may be so securely fixed that their vertical backlash (looseness) can be suppressed more securely.

### (Other Embodiments)

The present invention is not limited to the above-described embodiment, but any modifications is applicable.

While the above-described embodiment is configured such that the first engaging portion **42** engages from the upper side and the second engaging portion **53** engages from the lower side, the engaging directions are not limited to these and any direction, i.e., not only the vertical direction but the lateral direction and the longitudinal direction, is applicable as long as the both engaging directions of these portions **42, 53** are opposite to each other.

Further, while the attached member of the above-described embodiment is the grill member **2** which comprises the plural first-and-second lateral portions **21a, 21b** and the plural vertical portions **22** which are all integrated, the present invention is also applicable to an attached member which comprises either one of the lateral potions and the vertical portions.

Moreover, while the inclined portion **43a** is provided at a whole part of the upper-side portion of the engaging portion **43** in the above-described embodiment, it may be provided partially at a lateral part of the upper-side portion of the engaging portion **43** and the inclined portion may be provided at a front side and a rear side of this lateral part, respectively.

Additionally, while the present invention is applied to the case where the decorative member is attached to the grill member in the above-described embodiment, the attached member is not limited to the grill member of the vehicle and any other members than that provided at the vehicle, such as a fence for an architecture member or various types of grid members for furniture or home electronics, are applicable. The attaching member is not limited to the decorative member but any kinds of members, such as emblem members or sensors, can be used as well.

The members according to the present invention can be used in a case where various types of attaching members are attached to the engaged members.

## Claims

1. An attaching member (3) to be attached to an attached member (2), wherein the attached member (2) comprises a pair of first frame portions (21) which are configured to extend in a first direction, respectively, and are separated from each other in a second direction crossing the first direction, the attaching member (3) comprising:
a first member (4) including a first engaging portion (42) or a plurality of first engaging portions (42), wherein the first engaging portion (42) is configured to engage with the first frame portions (21) from one side of the second direction; and
a second member (5) including a second engaging portion (53) or a plurality of second engaging portions (53), wherein the second engaging portion (53) is configured to engage with a portion of the first frame portion (21) which is positioned on the other side, in the second direction, of the first engaging portion (42) from the other side of the second direction,
**characterized in that**
the first member (4) includes an engaging portion (43) which is configured to extend in a third direction crossing the first direction and the second direction and is configured to engage with the second member (5),
the second member (5) includes an engaged portion (54) which the engaging portion (43) of the first member (4) is configured to engage with,
the engaging portion (43) includes an inclined portion (43a) which is positioned on the one side of the second direction and is configured to extend obliquely from a tip of the engaging portion (43) toward a base portion of the engaging portion (43) and from the other side of the second direction to the one side of the second direction, and
a portion of the engaging portion (43) which is positioned on the one side of the second direction is configured to engage with the engaged portion (54) of the second member (5).

2. The attaching member (3) of claim 1, wherein the first engaging portion (42) and the second engaging portion (53) of the attaching member (3) are configured to engage with the first frame portion (21) of the attached member (2) from the same side of the third direction.

3. The attaching member (3) of claim 1 or 2, wherein the engaging portion (43) of the first member (4) is provided with a rib portion (44), and
the rib portion (44) is configured to extend in the first direction and in the third direction and is configured to contact the engaged portion (54) of the second member (5).

4. The attaching member (3) of any one of the preceding claims, wherein
the first member (4) includes the plurality of first engaging portions (42), and
the second member (5) includes the plurality of second engaging portions (53).

5. The attaching member (3) of any one of the preceding claims, further comprising a fastening member (6) configured to fasten the first member (4) and the second member (5).

6. The attaching member (3) of any one of the preceding claims, wherein
the attached member (2) is a grill for a vehicle (V), and
the grill comprises the first frame portion (21) and a second frame portion (22) which extends in the second direction.

7. The attaching member (3) of any one of the preceding claims, wherein the first engaging portion (42) and the second engaging portion (53) of the attaching member (3) are a decorative member configured to be attached to a vehicle (V).

8. The attaching member (3) of any one of the preceding claims, wherein an upper-end portion of the first engaging portion (42) is of a hook shape which is configured to bend from one side of the third direction toward the other side of the third direction.

9. The attaching member (3) of any one of the preceding claims, wherein a front-end portion of the second engaging portion (53) is of a hook shape which bends from one side of the third direction toward the other of the third direction.

10. The attaching member (3) of any one of the preceding claims, wherein the first member (4) of the attaching member (3) is a resin-made member.

11. The attaching member (3) of any one of the preceding claims, wherein the second member (5) of the attaching member (3) is a resin-made member.

12. A combination of the attaching member (3) of any one of the preceding claims and an attached member (2), wherein the attached member (2) comprises a pair of first frame portions (21) which are configured to extend in a first direction, respectively, and are separated from each other in a second direction crossing the first direction.

13. A vehicle (V) comprising the combination of claim 12.

## Patentansprüche

1. Befestigungselement (3), um an einem befestigten Element (2) befestigt zu werden, wobei das befestigte Element (2) ein Paar von ersten Rahmenabschnitten (21) umfasst, die konfiguriert sind, um sich jeweils in eine erste Richtung zu erstrecken und in einer zweiten Richtung, die die erste Richtung kreuzt, voneinander getrennt sind, das Befestigungselement (3) umfassend:
ein erstes Element (4), das einen ersten Eingriffsabschnitt (42) oder eine Vielzahl von ersten Eingriffsabschnitten (42) einschließt, wobei der erste Eingriffsabschnitt (42) konfiguriert ist, um mit den ersten Rahmenabschnitten (21) von einer Seite der zweiten Richtung aus in Eingriff zu treten; und
ein zweites Element (5), das einen zweiten Eingriffsabschnitt (53) oder eine Vielzahl von zweiten Eingriffsabschnitten (53) einschließt, wobei der zweite Eingriffsabschnitt (53) konfiguriert ist, um mit einem Abschnitt des ersten Rahmenabschnitts (21) in Eingriff zu treten, der auf der anderen Seite, in der zweiten Richtung, des ersten Eingriffsabschnitts (42) von der anderen Seite der zweiten Richtung aus positioniert ist,
**dadurch gekennzeichnet, dass**
das erste Element (4) einen Eingriffsabschnitt (43) einschließt, der konfiguriert ist, um sich in eine dritte Richtung zu erstrecken, die die erste Richtung und die zweite Richtung kreuzt, und konfiguriert ist, um mit dem zweiten Element (5) in Eingriff zu treten,
das zweite Element (5) einen eingegriffenen Abschnitt (54) einschließt, wobei der Eingriffsabschnitt (43) des ersten Elements (4) konfiguriert ist, um damit in Eingriff zu treten,
der Eingriffsabschnitt (43) einen geneigten Abschnitt (43a) einschließt, der auf der einen Seite der zweiten Richtung positioniert ist und konfiguriert ist, um sich schräg von einer Spitze des Eingriffsabschnitts (43) zu einem Basisabschnitt des Eingriffsabschnitts (43) hin und von der anderen Seite der zweiten Richtung zu der einen Seite der zweiten Richtung zu erstrecken, und
ein Abschnitt des Eingriffsabschnitts (43), der auf der einen Seite der zweiten Richtung positioniert ist, konfiguriert ist, um mit dem eingegriffenen Abschnitt (54) des zweiten Elements (5) in Eingriff zu treten.

2. Befestigungselement (3) nach Anspruch 1, wobei der erste Eingriffsabschnitt (42) und der zweite Eingriffsabschnitt (53) des Befestigungselements (3) konfiguriert sind, um mit dem ersten Rahmenabschnitt (21) des befestigten Elements (2) von der gleichen Seite der dritten Richtung aus in Eingriff zu treten.

3. Befestigungselement (3) nach Anspruch 1 oder 2, wobei der Eingriffsabschnitt (43) des ersten Elements (4) mit einem Rippenabschnitt (44) versehen ist, und
der Rippenabschnitt (44) konfiguriert ist, um sich in die erste Richtung und in die dritte Richtung zu erstrecken und konfiguriert ist, um den eingegriffenen Abschnitt (54) des zweiten Elements (5) zu berühren.

4. Befestigungselement (3) nach einem der vorstehenden Ansprüche, wobei
das erste Element (4) die Vielzahl von ersten Eingriffsabschnitten (42) einschließt, und
das zweite Element (5) die Vielzahl von zweiten Eingriffsabschnitten (53) einschließt.

5. Befestigungselement (3) nach einem der vorstehenden Ansprüche, ferner umfassend ein Fixierelement (6), das konfiguriert ist, um das erste Element (4) und das zweite Element (5) zu fixieren.

6. Befestigungselement (3) nach einem der vorstehenden Ansprüche, wobei
das befestigte Element (2) ein Kühlergrill für ein Fahrzeug (V) ist, und
der Kühlergrill den ersten Rahmenabschnitt (21) und einen zweiten Rahmenabschnitt (22) umfasst, der sich in die zweite Richtung erstreckt.

7. Befestigungselement (3) nach einem der vorstehenden Ansprüche, wobei der erste Eingriffsabschnitt (42) und der zweite Eingriffsabschnitt (53) des Befestigungselements (3) ein dekoratives Element sind, das konfiguriert ist, um an einem Fahrzeug (V) befestigt zu werden.

8. Befestigungselement (3) nach einem der vorstehenden Ansprüche, wobei ein oberer Endabschnitt des ersten Eingriffsabschnitts (42) eine Hakenform aufweist, die konfiguriert ist, um sich von einer Seite der dritten Richtung zu der anderen Seite der dritten Richtung hin zu biegen.

9. Befestigungselement (3) nach einem der vorstehenden Ansprüche, wobei ein vorderer Endabschnitt des zweiten Eingriffsabschnitts (53) eine Hakenform aufweist, die sich von einer Seite der dritten Richtung zu der anderen Seite der dritten Richtung hin biegt.

10. Befestigungselement (3) nach einem der vorstehenden Ansprüche, wobei das erste Element (4) des Befestigungselements (3) ein aus Harz hergestelltes Element ist.

11. Befestigungselement (3) nach einem der vorstehenden Ansprüche, wobei das zweite Element (5) des Befestigungselements (3) ein aus Harz hergestelltes Element ist.

12. Kombination aus dem Befestigungselement (3) nach einem der vorstehenden Ansprüche und einem befestigten Element (2), wobei das befestigte Element (2) ein Paar von ersten Rahmenabschnitten (21) umfasst, die konfiguriert sind, um sich jeweils in eine erste Richtung zu erstrecken und in einer zweiten Richtung, die die erste Richtung kreuzt, voneinander getrennt sind.

13. Fahrzeug (V), umfassend die Kombination nach Anspruch 12.

## Revendications

1. Élément de fixation (3) à fixer à un élément fixé (2), dans lequel l'élément fixé (2) comprend une paire de premières parties de cadre (21) qui sont conçues pour s'étendre dans une première direction, respectivement, et sont séparées l'une de l'autre dans une seconde direction croisant la première direction, l'élément de fixation (3) comprenant :
un premier élément (4) comportant une première partie de prise (42) ou une pluralité de premières parties de prise (42), dans lequel la première partie de prise (42) est conçue pour venir en prise avec les premières parties de cadre (21) à partir d'un côté de la deuxième direction ; et
un second élément (5) comportant une seconde partie de prise (53) ou une pluralité de secondes parties de prise (53), dans lequel la seconde partie de prise (53) est conçue pour venir en prise avec une partie de la première partie de cadre (21) qui est positionnée de l'autre côté, dans la deuxième direction, de la première partie de prise (42) à partir de l'autre côté de la deuxième direction,
**caractérisé en ce que**
le premier élément (4) comporte une partie de prise (43) qui est conçue pour s'étendre dans une troisième direction croisant la première direction et la deuxième direction et est conçue pour venir en prise avec le second élément (5),
le second élément (5) comporte une partie mise en prise (54) avec laquelle la partie de prise (43) du premier élément (4) est conçue pour venir en prise,
la partie de prise (43) comporte une partie inclinée (43a) qui est positionnée de l'un côté de la deuxième direction et est conçue pour s'étendre obliquement à partir d'une pointe de la partie de prise (43) vers une partie de base de la partie de prise (43) et à partir de l'autre côté de la deuxième direction vers un côté de la deuxième direction, et
une partie de la partie de prise (43) qui est positionnée de l'un côté de la deuxième direction est conçue pour venir en prise avec la partie mise en prise (54) du second élément (5).

2. Élément de fixation (3) selon la revendication 1, dans lequel la première partie de prise (42) et la seconde partie de prise (53) de l'élément de fixation (3) sont conçues pour venir en prise avec la première partie de cadre (21) de l'élément fixé (2) à partir du même côté de la troisième direction.

3. Élément de fixation (3) selon la revendication 1 ou 2, dans lequel la partie de prise (43) du premier élément (4) est pourvue d'une partie de nervure (44), et
la partie de nervure (44) est conçue pour s'étendre dans la première direction et dans la troisième direction et est conçue pour entrer en contact avec la partie mise en prise (54) du second élément (5).

4. Élément de fixation (3) selon l'une quelconque des revendications précédentes, dans lequel
le premier élément (4) comporte la pluralité de premières parties de prise (42), et
le second élément (5) comporte la pluralité de secondes parties de prise (53).

5. Élément de fixation (3) selon l'une quelconque des revendications précédentes, comprenant en outre un élément d'attache (6) conçu pour attacher le premier élément (4) et le second élément (5).

6. Élément de fixation (3) selon l'une quelconque des revendications précédentes, dans lequel
l'élément fixé (2) est une grille pour un véhicule (V), et
la grille comprend la première partie de cadre (21) et une seconde partie de cadre (22) qui s'étend dans la deuxième direction.

7. Élément de fixation (3) selon l'une quelconque des revendications précédentes, dans lequel la première partie de prise (42) et la seconde partie de prise (53) de l'élément de fixation (3) sont un élément décoratif conçu pour être fixé à un véhicule (V).

8. Élément de fixation (3) selon l'une quelconque des revendications précédentes, dans lequel une partie d'extrémité supérieure de la première partie de prise (42) est en forme de crochet qui est conçue pour se plier d'un côté de la troisième direction vers l'autre côté de la troisième direction.

9. Élément de fixation (3) selon l'une quelconque des revendications précédentes, dans lequel une partie d'extrémité avant de la seconde partie de prise (53) est en forme de crochet qui se plie d'un côté de la troisième direction vers l'autre de la troisième direction.

10. Élément de fixation (3) selon l'une quelconque des revendications précédentes, dans lequel le premier élément (4) de l'élément de fixation (3) est un élément fait en résine.

11. Élément de fixation (3) selon l'une quelconque des revendications précédentes, dans lequel le second élément (5) de l'élément de fixation (3) est un élément fait en résine.

12. Combinaison de l'élément de fixation (3) selon l'une quelconque des revendications précédentes et d'un élément fixé (2), dans laquelle l'élément fixé (2) comprend une paire de premières parties de cadre (21) qui sont conçues pour s'étendre dans une première direction, respectivement, et sont séparées l'une de l'autre dans une seconde direction croisant la première direction.

13. Véhicule (V) comprenant la combinaison selon la revendication 12.
